# EUROPEAN PATENT SPECIFICATION

(11) **EP 0 944 255 B1**
(45) Date of publication and mention of the grant of the patent: **28.01.2004**
(21) Application number: 99301618.7
(22) Date of filing: 03.03.1999
(51) Int. Cl.: H04N 5/52

(54) **Digital television tuner**
Digitaler Fernsehtuner
Tuner numérique de télévision

(30) Priority: 16.03.1998 JP 6517198
(43) Date of publication of application: 22.09.1999
(73) Proprietor: ALPS ELECTRIC CO., LTD., Ota-ku Tokyo 145 (JP)
(72) Inventor: Kunishima, Tsutomu, Watari-cho, Watari-gun, Miyagi-ken (JP)
(74) Representative: Kensett, John Hinton

(56) References cited:
- EP-A- 0 574 273
- EP-A- 0 664 645
- DE-A- 19 639 237

## Description

The present invention relates to a digital television tuner receiving digital and analog television signals.

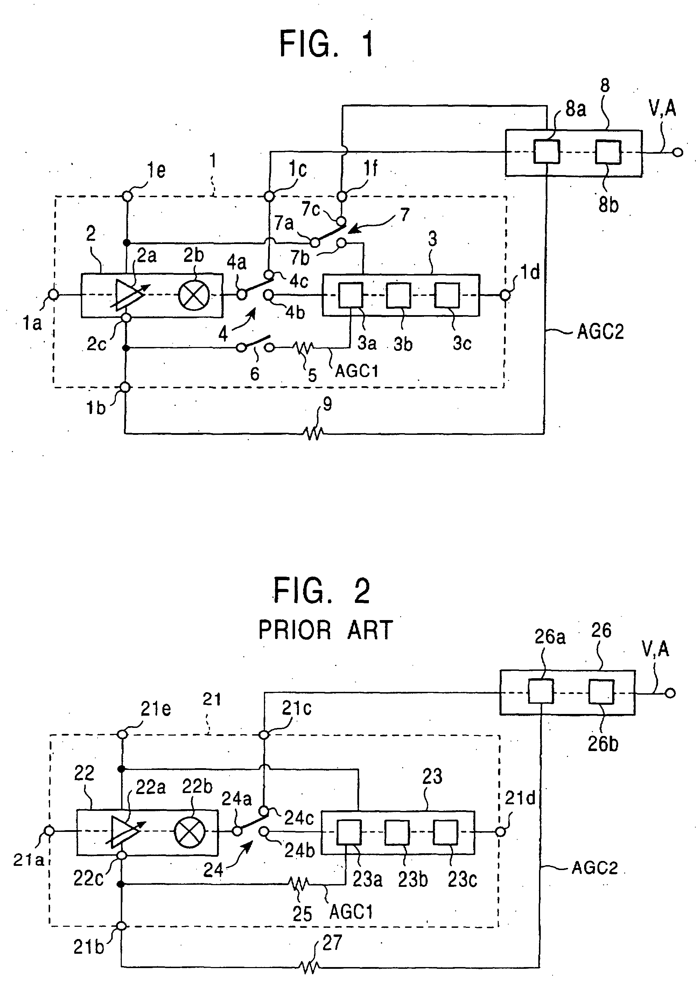

Figure 2 is a block diagram for explaining a conventional digital television tuner. Here, a digital television tuner 21 comprises a tuning circuit 22 and a digital processor 23. A tuner input terminal 21a receives not only a television signal in a digital method (hereinafter, this is called a digital television signal) but also a television signal in an analog method (hereinafter, this is called an analog television signal). The tuning circuit 22 comprises a gain control amplifier 22a, a mixer 22b, and a local oscillator (not shown). Then, any one of the digital television signal and analog television signal that are inputted to the tuner input terminal 21a is selected inside the tuning circuit 22. After the selected signal is amplified by the gain control amplifier 22a, the selected signal is frequency-converted into an intermediate frequency signal in the mixer 22b by being mixed with a local oscillation signal outputted from the local oscillator, and is outputted.

Therefore, the tuning circuit 22 outputs an intermediate frequency signal based on the digital television signal (hereinafter, this is called a digital IF signal) or an intermediate frequency signal based on the analog television signal (hereinafter, this is called an analog IF signal). Here, a gain control terminal 22c to which a control voltage for controlling the gain of the gain control amplifier 22a is supplied is provided in the tuning circuit 22. This gain control terminal 22c is connected to a gain control voltage input terminal 21b of the digital television tuner 21.

A transfer switch 24 is provided between the tuning circuit 22 and digital processor 23. The transfer switch 24 has a common terminal 24a and two switched terminals 24b and 24c. The common terminal 24a is connected to an output terminal of the tuning circuit 22, and one switched terminal 24b is connected to an input terminal of the digital processor 23. In addition, another switched terminal 24c is connected to an analog IF signal output terminal 21c provided in this digital television tuner 21.

In addition, if the digital television tuner 21 receives a digital television signal, the common terminal 24a of the transfer switch 24 is connected to one switched terminal 24b, and a digital IF signal from the tuning circuit 22 is inputted to the digital processor 23. Furthermore, if the digital television tuner 21 receives an analog television signal, the common terminal 24a of the transfer switch 24 is connected to another switched terminal 24c, and an analog IF signal from the tuning circuit 22 is outputted to the analog IF signal output terminal 21c.

In addition, the digital processor 23 comprises a gain control voltage generator 23a, a mixer 23b, an analog-digital converter 23c, and a local oscillator (not shown). The gain control voltage generator 23a generates a first gain control voltage (AGC1). This first gain control voltage (AGC1) changes within the range of about 5.5-0 volts, becomes large when a level of the digital television signal is low, and becomes small when high. In addition, the digital IF signal is frequency-converted into a frequency of several MHz in the mixer 23b by being mixed with a local oscillation signal from the local oscillator. Furthermore, the digital IF signal frequency-converted is converted into a digital signal (D) by the analog-digital converter 23c to be outputted to a tuner output terminal 21d. The first gain control voltage (AGC1) is supplied to the gain control terminal 22c of the tuning circuit 22 through a register 25 to control the gain of the gain control amplifier 22a.

In addition, a power supply voltage is supplied from a power supply terminal 21e to the tuning circuit 22 and digital processor 23.

On the other hand, if an analog television signal is received with using the above-described digital television tuner 21, an analog processor 26 that is provided separately from the digital television tuner 21 is used. In addition, a power supply voltage that is different from the power supply voltage supplied to the power supply terminal 21e of the digital television tuner 21 is supplied to the analog processor 26. Furthermore, a signal input terminal of the analog processor 8 is connected to the analog IF signal output terminal 21c of the digital television tuner 21. This analog processor 26 comprises a gain control voltage generator 26a, and a demodulator 26b, generates a second gain control voltage (AGC2) from the gain control voltage generator 26a, and further outputs a picture signal (V) and an audio signal (A) that are demodulated by the demodulator 26b. The second gain control voltage (AGC2) also changes within the range of about 5.5-0 volts, becomes large when a level of the analog television signal is low, and becomes small when high.

The second gain control voltage (AGC2) outputted from the analog processor 26 is supplied to the gain control voltage input terminal 21b of the digital television tuner 21 through a register 27. Then, the second gain control voltage (AGC2) supplied to the gain control voltage input terminal 21b in the digital television tuner 21 is supplied to the gain control terminal 22c of the tuning circuit 22. Owing to this, the gain of the gain control amplifier 22a of the tuning circuit 22 is controlled when the analog television signal is received.

In the conventional construction described above, even at the time of receiving an analog television signal, the power supply voltage is supplied to the digital processor 23, and hence the digital processor 23 is in an operating state. Therefore, the local oscillation signal is generated by the local oscillator in the digital processor 23. Hence, this local oscillation signal interferes the operation of the analog processor 26 by directly plunging into the analog processor 26 via a space. In addition, this local oscillation signal is inputted to the analog processor 26 via a line where the register 25 supplying the first gain control voltage (AGC1) to the tuning circuit 22 is provided and via a line where the register 27 supplying the second gain control voltage (AGC2) to the tuning circuit 22 is provided. In consequence, this local oscillation signal similarly interferes the operation of the analog processor 26, which is a problem of the conventional digital television tuner.

In addition, when an analog television signal is received, a digital IF signal is not inputted although the power supply voltage from the power supply terminal 21e is supplied to the digital processor 23. Therefore, the first gain control voltage (AGC1) from the gain control voltage generator 23a of the digital processor 23 becomes the maximum value (nearly 5.5 volts). Hence, even if the second gain control voltage (AGC2) from the analog processor 26 becomes low since a level of the analog television signal becomes large, the first gain control voltage (AGC1) that is a high voltage is superimposed on the gain control terminal 22c of the tuning circuit 22 through the register 25. Therefore, the conventional digital television tuner has another problem that, since the voltage at the gain control terminal 22c becomes higher than the second gain control voltage (AGC1), accurate gain control cannot be performed.

Then, a digital television tuner of the present invention prevents the disturbance of the local oscillation signal, which is outputted from the digital processor 23, and also avoids the influence of the first gain control voltage (AGC1), which is outputted from the digital processor 23, to the second gain control voltage (AGC2).

A conventional receiver adapted to receive both analog signals and digital signals is disclosed in EP-A-0574273.

According to an aspect of the present invention there is provided a digital television tuner comprising: a tuning circuit that has an input terminal to which digital and analog television signals are inputted and which outputs two types of intermediate frequency signals: a first intermediate frequency signal based on the digital television signal and a second intermediate frequency signal based on the analog television signal; a gain control amplifier, connected to said input terminal, for amplifying the digital and analog television signals, and a gain control terminal to which a first gain control voltage (AGC1) for controlling the gain of the gain control amplifier is inputted; a digital processor for outputting a first gain control voltage by processing the first intermediate frequency signal; an output terminal to which an analog processor outputting a second gain control voltage (AGC2) by processing the second intermediate frequency signal is connected; and a gain control voltage input terminal which is connected to the gain control terminal and receives the second gain control voltage from the analog processor, wherein first switching means is provided between the tuning circuit and the digital processor; wherein opening and closing means is provided between the gain control terminal and the digital processor; wherein, if the digital television tuner receives a digital television signal, not only the first switching means inputs the first intermediate frequency signal, which is outputted from the tuning circuit, to the digital processor, but also the opening and closing means supplies the first gain control voltage to the gain control terminal; and wherein, if the digital television tuner receives an analog television signal, not only the first switching means leads the second intermediate frequency signal, which is outputted from the tuning circuit, to the output terminal of an analog intermediate frequency signal, but also the opening and closing means prevents the first gain control voltage from being supplied to the gain control terminal.

Preferably, a digital television tuner of the present invention prevents a power supply voltage from being supplied to the digital processor if the digital television tuner receives an analog television signal.

Preferably, a digital television tuner of the present invention is characterized in that the tuning circuit has a first power supply terminal for supplying a power supply voltage to the tuning circuit, a second power supply terminal for supplying a power supply voltage to the analog processor, and second switching means, that, if the digital television tuner receives a television signal in the digital method, the second switching means supplies the power supply voltage, supplied to the first power supply terminal, to the digital processor, and that, if the digital television tuner receives an analog television signal, not only the second switching means leads the power supply voltage, supplied to the first power supply terminal, to the second power supply terminal, but also the second switching means prevents the power supply voltage from being supplied to the digital processor.

Embodiments of the present invention will now be described by way of example only, with reference to accompanying diagrammatic drawings in which:
Figure 1 is a block diagram for explaining a digital television tuner of the present invention; and
Figure 2 is a block diagram for explaining a conventional digital television tuner.

Figure 1 is a block diagram for explaining a digital television tuner of the present invention. Here, a digital television tuner 1 comprises a tuning circuit 2 and a digital processor 3. A tuner input terminal 1a receives not only a television signal in a digital method (hereinafter, this is called a digital television signal) but also a television signal in an analog method (hereinafter, this is called an analog television signal). The tuning circuit 2 has a gain control amplifier 2a, a mixer 2b, a local oscillator (not shown), and the like. Then, any one of the digital television signal and analog television signal that are inputted to the tuner input terminal 1a is selected inside the tuning circuit 2. After the selected signal is amplified by the gain control amplifier 2a, the selected signal is frequency-converted into an intermediate frequency signal in the mixer 2b by being mixed with a local oscillation signal from the local oscillator, and is outputted.

Therefore, the tuning circuit 2 outputs an intermediate frequency signal based on the digital television signal (hereinafter, this is called a digital IF signal) or an intermediate frequency signal based on the analog television signal (hereinafter, this is called an analog IF signal). Here, a gain control terminal 2c to which a control voltage for controlling the gain of the gain control amplifier 2a is supplied is provided in the tuning circuit 2. This gain control terminal 2c is connected to again control voltage input terminal 1b of the digital television tuner 1.

First switching means 4 is provided between the tuning circuit 2 and digital processor 3. The first switching means 4 has a common terminal 4a and two switched terminals 4b and 4c. The common terminal 4a is connected to an output terminal of the tuning circuit 2, and one switched terminal 4b is connected to an input terminal of the digital processor 3. In addition, another switched terminal 4c is connected to an analog IF signal output terminal 1c provided in this digital television tuner 1.

In addition, if the digital television tuner 1 receives a digital television signal, the common terminal 4a of the first switching means 4 is connected to one switched terminal 4b, and a digital IF signal from the tuning circuit 2 is inputted to the digital processor 3. Furthermore, if the digital television tuner 1 receives an analog television signal, the common terminal 4a of the first switching means 4 is connected to another switched terminal 4c, and an analog IF signal from the tuning circuit 2 is outputted to the analog IF signal output terminal 1c.

In addition, the digital processor 3 comprises a gain control voltage generator 3a, a mixer 3b, an analog-digital converter 3c, and a local oscillator (not shown), and generates a first gain control voltage (AGC1) from the gain control voltage generator 3a. This first gain control voltage (AGC1) changes within the range of about 5.5-0 volts, becomes large when a level of the digital television signal is low, and becomes small when high. In addition, the digital IF signal is frequency-converted into a frequency of several MHz in the mixer 3b by being mixed with a local oscillation signal from the local oscillator. Furthermore, the digital IF signal frequency-converted is converted into a digital signal (D) by the analog-digital converter 3c to be outputted to a tuner output terminal 1d. The first gain control voltage (AGC1) is supplied to the gain control terminal 2c of the tuning circuit 2 through a register 5 and opening and closing means 6 to control the gain of the gain control amplifier 2a. This opening and closing means becomes open if the digital television tuner receives an analog television signal, and becomes close if a digital television signal.

In addition, a first power supply terminal 1e and a second power supply terminal 1f are provided in the digital television tuner 1. A power supply voltage is supplied from the external to the first power supply terminal le. The power supply voltage supplied to the first power supply terminal 1e is directly supplied to the tuning circuit 2 and is supplied to the digital processor 3 through second switching means 7. The second switching means 7 has a common terminal 7a, and two switched terminals 7b and 7c. The common terminal 7a is connected to the first power supply terminal 1e, and one switched terminal 7b is connected to the digital processor 3. In addition, another switched terminal 7c is connected to the second power supply terminal 1f. In this second switching means 7, the common terminal 7a is connected to one switched terminal 7b and the power supply voltage is supplied to the digital processor 3 if the digital television tuner 1 receives the digital television signal. Furthermore, if the digital television tuner 1 receives the analog television signal, the common terminal 7a is connected to anther switched terminal 7c and the power supply voltage is outputted to the second power supply terminal 1f.

On the other hand, if an analog television signal is received with using the above-described digital television tuner 1, an analog processor 8 that is provided separately from the digital television tuner 1 is used. In addition, a power supply voltage is supplied from the second power supply terminal 1f of the digital television tuner 1 to the analog processor 8. In addition, an analog IF signal is inputted from an analog IF signal output terminal 1c of the digital television tuner 1. This analog processor 8 comprises a gain control voltage generator 8a and a demodulator 8b, generates a second gain control voltage (AGC2) from the gain control voltage generator 8a, and further outputs a picture signal (V) and an audio signal (A) that are demodulated by the demodulator 8b. The second gain control voltage (AGC2) also changes within the range of nearly 5.5-0 volts, becomes large when a level of the analog television signal is low, and becomes small when high.

The second gain control voltage (AGC2) outputted from the analog processor 8 is supplied to the gain control voltage input terminal 1b of the digital television tuner 1 through a register 9. Owing to this, the gain of the gain control amplifier 2a of the tuning circuit 2 is controlled when the analog television signal is received.

Owing to the above construction, if the digital television tuner 1 receives a digital television signal, the second switching means 7 supplies the power supply voltage to the digital processor 3, and the first switching means 4 inputs the digital IF signal, outputted from the tuning circuit 2, to the digital processor 3. Then, with closing the opening and closing means, the first gain control voltage (AGC1) generated from the gain control voltage generator 3a of the digital processor 3 is supplied to the gain control amplifier 2a of the tuning circuit 2.

At this time, since the power supply voltage is not supplied to the analog processor 8, the second gain control voltage (AGC2) based on the analog television signal is not generated from the gain control voltage generator 8a, and its level is nearly 0 volts.

Therefore, the second gain control voltage (AGC2) is not superimposed on the first gain control voltage (AGC1), but only the first gain control voltage (AGC1) is supplied to the gain control amplifier 2a of the tuning circuit 2.

On the other hand, if the digital television tuner 1 receives an analog television signal, the second switching means 7 supplies the power supply voltage to the analog processor 8, and the first switching means 4 inputs the analog IF signal, outputted from the tuning circuit 2, to the analog processor 8. Furthermore, the second gain control voltage (AGC2) generated from the gain control voltage generator 8a of the analog processor 8 is supplied to the gain control amplifier 2a of the tuning circuit 2. At this time, with opening the opening and closing means 6, the gain control voltage generator 3a of the digital processor 3 is separated from the gain control terminal 2c of the tuning circuit 2.

Therefore, the first gain control voltage (AGC1) is not superimposed on the second gain control voltage (AGC2), but only the second gain control voltage (AGC2) is supplied to the gain control amplifier 2a of the tuning circuit 2.

In addition, if the digital television tuner 1 receives an analog television signal, the power supply voltage is not supplied to the digital processor 3, and hence the local oscillator (not shown) in the digital processor 3 does not operate. Therefore, since the local oscillation signal is not generated, the local oscillation signal does not interfere the operation of the analog processor 8.

Furthermore, if the digital television tuner receives a digital television signal, the power supply voltage is not supplied to the analog processor, but is supplied to the digital processor. Moreover, if the digital television tuner receives an analog television signal, the power supply voltage is not supplied to the digital processor, but is supplied to the analog processor added in the external, and hence power saving is planed.

As described above, in the digital television tuner of the present invention, the first switching means is provided between the tuning circuit and digital processor, and an opening and closing means is provided between the gain control terminal and digital processor. In addition, if the digital television tuner receives a digital television signal, not only the first switching means inputs the first intermediate frequency signal, which is outputted from the tuning circuit, to the digital processor, but also the opening and closing means supplies the first gain control voltage to the gain control terminal. Furthermore, if the digital television tuner receives an analog television signal, not only the first switching means leads the second intermediate frequency signal, outputted from the tuning circuit, to the output terminal of the analog intermediate frequency signal, but also the opening and closing means prevents the first gain control voltage from being supplied to the gain control terminal. If the digital television tuner receives an analog television signal, the first gain control voltage is not superimposed on the second gain control voltage, but only the second gain control voltage is supplied to the gain control amplifier of the tuning circuit, and hence there is no influence of the first gain control voltage.

In addition, if the digital television tuner receives an analog television signal, the opening and closing means becomes open. Therefore, even if the local oscillator in the digital processor operates, the local oscillation signal of the digital processor is not inputted through a line for supplying the first gain control voltage to the tuning circuit. Hence, the local oscillation signal does not interfere the operation of the analog processor.

In addition, if the digital television tuner receives an analog television signal, the power supply voltage is not supplied to the digital processor. Therefore, since the local oscillator in the digital processor does not operate, a local oscillation signal is not generated, and hence the local oscillation signal does not interfere the operation of the analog processor.

Furthermore, in the digital television tuner of the present invention, the tuning circuit has the first power supply terminal for supplying the power supply voltage to the tuning circuit, the second power supply terminal for supplying the power supply voltage to the analog processor, and second switching means. If the digital television tuner receives a digital television signal, the second switching means supplies the power supply voltage, supplied to the first power supply terminal, to the digital processor. Moreover, if the digital television tuner receives an analog television signal, not only the second switching means leads the power supply voltage, supplied to the first power supply terminal, to the second power supply terminal, but also the second switching means prevents the power supply voltage from being supplied to the digital processor. Therefore, power saving is planed.

## Claims

1. A digital television tuner (1) comprising:
a tuning circuit (2) that has an input terminal (1a) to which digital and analog television signals are inputted and which outputs two types of intermediate frequency signals: a first intermediate frequency signal based on the digital television signal and a second intermediate frequency signal based on the analog television signal; a gain control amplifier (2a), connected to said input terminal, for amplifying the digital and analog television signals, and a gain control terminal (2c) to which a first gain control voltage (AGC1) for controlling the gain of the gain control amplifier is inputted; a digital processor (3) for outputting the first gain control voltage (AGC1) by processing the first intermediate frequency signal; an output terminal (1c) to which an analog processor (8) outputting a second gain control voltage (AGC2) by processing the second intermediate frequency signal is connected; and a gain control voltage input terminal (1b) which is connected to the gain control terminal (2c) and receives the second gain control voltage (AGC2) from the analog processor (8), wherein first switching means (4) is provided between the tuning circuit (2) and the digital processor (3); wherein opening and closing means (6) is provided between the gain control terminal and the digital processor; wherein, if the digital television tuner receives a digital television signal, not only the first switching means (4) inputs the first intermediate frequency signal, which is outputted from the tuning circuit, to the digital processor, but also the opening and closing means (6) supplies the first gain control voltage (AGC1) to the gain control terminal (2c); and wherein, if the digital television tuner receives an analog television signal, not only the first switching means leads the second intermediate frequency signal, which is outputted from the tuning circuit, to the output terminal of an analog intermediate frequency signal, but also the opening and closing means prevents the first gain control voltage from being supplied to the gain control terminal.

2. A digital television tuner according to claim 1, wherein the digital television tuner prevents a power supply voltage from being supplied to the digital processor if the digital television tuner receives an analog television signal.

3. A digital television tuner according to claim 2, wherein the tuning circuit has a first power supply terminal (1e) for supplying a power supply voltage to the tuning circuit, a second power supply terminal (1f) for supplying a power supply voltage to the analog processor, and second switching means (7); wherein, if the digital television tuner receives a digital television signal, the second switching means supplies the power supply voltage, supplied to the first power supply terminal, to the digital processor; and wherein, if the digital television tuner receives an analog television signal, not only the second switching means leads the power supply voltage, supplied to the first power supply terminal, to the second power supply terminal, but also the second switching means prevents the power supply voltage from being supplied to the digital processor.

## Patentansprüche

1. Digitaler Fernsehtuner (1), umfassend:
eine Abstimmschaltung (2), die einen Eingangsanschluss (1a) besitzt, dem digitale und analoge Fernsehsignale zugeführt werden, und die zwei Arten von Zwischenfrequenzsignalen ausgibt, nämlich ein erstes Zwischenfrequenzsignal basierend auf dem digitalen Fernsehsignal, und ein zweites Zwischenfrequenzsignal basierend auf dem analogen Fernsehsignal, einen Verstärkungsregelverstärker (2a), der an den Eingangsanschluss angeschlossen ist, um das digitale und das analoge Fernsehsignal zu verstärken, und einen Verstärkungsregelungsanschluss (2c), an den eine erste Verstärkungsregelspannung (AGC1) zum Regeln der Verstärkung des Verstärkungsregelverstärkers eingegeben wird; einen Digitalprozessor (3) zum Ausgeben der ersten Verstärkungsregelspannung (AGC1) durch Verarbeiten des ersten Zwischenfrequenzsignals; einen Ausgangsanschluss (1c), an den ein Analogprozessor (8) angeschlossen ist, der durch Verarbeiten des zweiten Zwischenfrequenzsignals eine zweite Verstärkungsregelspannung (AGC2) ausgibt; und einen Verstärkungsregelspannungsanschluss (1b), der an den Verstärkungsregelungsanschluss (2c) angeschlossen ist und von dem Analogprozessor (8) die zweite Verstärkungsregelspannung (AGC2) empfängt, wobei eine erste Schalteinrichtung (4) zwischen der Abstimmschaltung (2) und dem Digitalprozessor (3) vorgesehen ist, zwischen dem Verstärkungsregelungsanschluss und dem Digitalprozessor eine Öffnungs- und Schließeinrichtung (6) vorgesehen ist, wobei, wenn der digitale Fernsehtuner ein digitales Fernsehsignal empfängt, nicht nur die erste Schalteinrichtung (4) das erste Zwischenfrequenzsignal, das von der Abstimmschaltung ausgegeben wird, in den Digitalprozessor eingibt, sondern die Öffnungs- und Schließeinrichtung (6) außerdem die erste Verstärkungsregelspannung (AGC1) an den Verstärkungsregelungsanschluss (2c) gibt; und wobei, wenn der digitale Fernsehtuner ein analoges Fernsehsignal empfängt, nicht nur die erste Schalteinrichtung das von der Abstimmschaltung ausgegebene zweite Zwischenfrequenzsignal an den Ausgangsanschluss des analogen Zwischenfrequenzsignals gibt, sondern außerdem die Öffnungs- und Schließeinrichtung verhindert, dass die erste Verstärkungsregelschaltung an den Verstärkungsregelungsanschluss geliefert wird.

2. Digitaler Fernsehtuner nach Anspruch 1, der verhindert, dass eine Versorgungsspannung an den Digitalprozessor gelangt, wenn er ein analoges Fernsehsignal empfängt.

3. Digitaler Fernsehtuner nach Anspruch 2, bei dem die Abstimmschaltung einen ersten Spannungsversorgungsanschluss (1e) zum Speisen der Abstimmschaltung mit einer Versorgungsspannung aufweist, einen zweiten Spannungsversorgungsanschluss (1f), zum Speisen des Analogprozessors mit einer Versorgungsspannung aufweist, und eine zweite Schalteinrichtung (7) aufweist, wobei, wenn der digitale Fernsehtuner ein digitales Fernsehsignal empfängt, die zweite Schalteinrichtung die an den ersten Spannungsversorgungsanschluss gerichtete Versorgungsspannung an den Digitalprozessor gibt, und wobei, wenn der digitale Fernsehtuner ein analoges Fernsehsignal empfängt, nicht nur die zweite Schalteinrichtung die an den ersten Spannungsversorgungsanschluss gegebene Versorgungsspannung an den zweiten Spannungsversorgungsanschluss gibt, sondern die zweite Schalteinrichtung auch verhindert, dass die Versorgungsspannung an den Digitalprozessor gegeben wird.

## Revendications

1. Syntoniseur de télévision numérique (1), comprenant :
un circuit de syntonisation (2) qui présente une borne d'entrée (1a) dans laquelle sont entrés des signaux de télévision numériques et analogiques, et qui fait sortir deux types de signaux de fréquence intermédiaire : un premier signal de fréquence intermédiaire sur la base du signal de télévision numérique et un deuxième signal de fréquence intermédiaire sur la base du signal de télévision analogique ; un amplificateur de commande du gain (2a), connecté à ladite borne d'entrée, permettant d'amplifier les signaux de télévision numériques et analogiques, et une borne de commande du gain (2c) où est entrée une première tension de commande du gain (AGC1) permettant de commander le gain de l'amplificateur de commande du gain ; un processeur numérique (3) permettant de faire sortir la première tension de commande du gain (AGC1) en traitant le premier signal de fréquence intermédiaire ; une borne de sortie (1c) à laquelle est connecté un processeur analogique (8) faisant sortir une deuxième tension de commande du gain (AGC2) en traitant le deuxième signal de fréquence intermédiaire ; et une borne d'entrée de tension de commande du gain (1b) qui est connectée à la borne de commande du gain (2c) et reçoit la deuxième tension de commande du gain (AGC2) depuis le processeur analogique (8), dans lequel un premier moyen de commutation (4) est prévu entre le circuit de syntonisation (2) et le processeur numérique (3) ; dans lequel un moyen d'ouverture et de fermeture (6) est prévu entre la borne de commande du gain et le processeur numérique ; dans lequel, si le syntoniseur de télévision numérique reçoit un signal de télévision numérique, non seulement le premier moyen de commutation (4) entre le premier signal de fréquence intermédiaire, qui sort du circuit de syntonisation, dans le processeur numérique, mais, en plus, le moyen d'ouverture et de fermeture (6) délivre la première tension de commande du gain (AGC1) à la borne de commande du gain (2c) ; et dans lequel, si le syntoniseur de télévision numérique reçoit un signal de télévision analogique, non seulement le premier moyen de commutation achemine le deuxième signal de fréquence intermédiaire, qui sort du circuit de syntonisation, vers la borne de sortie d'un signal de fréquence intermédiaire analogique mais, en plus, le moyen d'ouverture et de fermeture empêche la première tension de commande du gain d'être délivrée à la borne de commande du gain.

2. Syntoniseur de télévision numérique selon la revendication 1, dans lequel le syntoniseur de télévision numérique empêche une tension d'alimentation électrique d'être délivrée au processeur numérique si le syntoniseur de télévision numérique reçoit un signal de télévision analogique.

3. Syntoniseur de télévision numérique selon la revendication 2, dans lequel le circuit de syntonisation présente une première borne d'alimentation électrique (le) permettant de délivrer une tension d'alimentation électrique au circuit de syntonisation, une deuxième borne d'alimentation électrique (1f) permettant de délivrer une tension d'alimentation électrique au processeur analogique, et un deuxième moyen de commutation (7) ; dans lequel, si le syntoniseur de télévision numérique reçoit un signal de télévision numérique, le deuxième moyen de commutation délivre la tension d'alimentation électrique, délivrée à la première borne d'alimentation électrique, au processeur numérique ; et dans lequel, si le syntoniseur de télévision numérique reçoit un signal de télévision analogique, non seulement le deuxième moyen de commutation achemine la tension d'alimentation électrique, délivrée à la première borne d'alimentation électrique, vers la deuxième borne d'alimentation électrique, mais, en plus, le deuxième moyen de commutation empêche la tension d'alimentation électrique d'être délivrée au processeur numérique.
